# EUROPÄISCHE PATENTANMELDUNG

(11) **EP 0 817 407 A2**
(43) Veröffentlichungstag der Anmeldung: **07.01.1998**
(21) Anmeldenummer: 97401431.8
(22) Anmeldetag: 19.06.1997
(51) Int. Cl.: H04B 10/155

(54) **Sendeeinrichtung, Sendeeinheit und optisches Übertragungssystem zur optischen Übertragung analoger elektrischer Signale**

(30) Priorität: 28.06.1996 DE 19626128
(71) Anmelder: ALCATEL ALSTHOM COMPAGNIE GENERALE D'ELECTRICITE, 75008 Paris (FR)
(72) Erfinder: Pfeiffer, Thomas, Dr., 70569 Stuttgart (DE)
(74) Vertreter: Schätzle, Albin, Dipl.-Phys.

(57) **Zusammenfassung**

Ein optisches Übertragungssystem (SYS), z.B. ein Kabelfernsehverteilsystem, beinhaltet wenigstens eine Sendeeinrichtung (SEN), ein optisches Übertragungsnetz (NET) und eine Vielzahl von Empfangseinrichtungen (EMP). Zur Übertragung von analogen elektrischen Signalen, z.B. Fernsehsignale im MHz-Bereich, in einem solchen optischen Übertragungssystem werden die analogen elektrischen Signale zunächst nach dem Pulsdauermodulationsverfahren digitalisiert (PDM) und anschließend einem elektro/optischen Modulator (MOD) zugeführt. In einer optischen Pulsquelle (PULS) werden optische Impulse generiert, deren Impulsfolgefrequenz mindestens um den Faktor 100 über der 3dB-Grenzfrequenz der analogen elektrischen Signale liegt, z.B. 10 GHz. Die optischen Impulse werden im elektro/optischen Modulator (MOD) mit den digitalisierten Signalen moduliert und anschließend zu den Empfangseinrichtungen (EMP) übertragen. Zur Rückgewinnung der analogen elektrischen Signale sind lediglich ein Optisch/Elektrisch-Umsetzer (OE) und ein passiver elektrischer Tiefpaß (TP) erforderlich. Zur Erhöhung der Übertragungskapazität können die modulierten optischen Impulse unterschiedlicher Sendeeinrichtungen (SEN) im optischen Zeitmultiplexverfahren übertragen werden.

## Beschreibung

Die Erfindung betrifft eine Sendeeinrichtung, eine Sendeeinheit und ein optisches Übertragungssystem zur optischen Übertragung analoger elektrischer Signale gemäß den Patenansprüchen 1, 7 und 9. Die analogen elektrischen Signale sind beispielsweise Fernsehsignale. Aus dem Artikel "Diamant - Ein digitales optisches Fernsehverteilnetz", aus telecom praxis 2/1993, Seiten 38 bis 45, ist ein optisches Übertragungssystem zur optischen Übertragung von Fernsehsignalen bekannt. Die Fernsehsignale haben eine Bandbreite von 7 MHz bis 14 MHz. Sie werden analog/digital umgesetzt, üblicherweise mittels Pulscodemodulation, elektrisch gemultiplext, sowie elektrisch/optisch umgesetzt; ein optischer Impuls entspricht üblicherweise einem elektrischen Impuls und somit einem Bit. Die nun optischen digitalen Fernsehsignale werden über ein passives optisches Übertragungsnetz aus Glasfasern und optischen Splittern zu mehreren Empfangseinrichtungen übertragen. Jede Empfangseinrichtung beinhaltet einen Optisch/Elektrisch-Umsetzer und einen Digital/Analog-Umsetzer zur Rückgewinnung der analogen elektrischen Signale. Die Anzahl der gemultiplexten Fernsehsignale wird begrenzt durch die Auflösung und Geschwindigkeit der verfügbaren Digital/Analog-Umsetzer. Jeder Digital/Analog-Umsetzer ist ein aktives Bauelement, das einer Steuerung bedarf und synchronisiert werden muß.

Es ist deshalb eine Aufgabe der Erfindung, analoge elektrische Signale optisch zu übertragen.

Diese Aufgabe wird durch die Lehre der unabhängigen Patentansprüche 1, 7 und 9 gelöst. Vorteilhafte Ausgestaltungen sind den abhängigen Patentansprüchen 2 bis 6 und 8 zu entnehmen.

Ein besonderer Vorteil der Erfindung ist die Anwendbarkeit bis zu Bitraten von über 10 GHz. Dies wird z.B. durch den Einsatz eines modengekoppelten Faserringlasers als optische Pulsquelle erreicht.

Ein weiterer Vorteil der Erfindung ist die Reduzierung der Genauigkeitsanforderungen an die Linearität des elektro/optischen Modulators durch die Verwendung einer festen Impulsfolgefrequenz. Mit einer festen Impulsfolgefrequenz können eine Vielzahl analoger elektrischer Signale unterschiedlicher Bandbreite übertragen werden.

Des weiteren kann die Übertragungskapazität durch optisches Zeitmultiplexen von modulierten optischen Impulsen unterschiedlicher Sendeeinrichtungen erhöht werden.

Ferner ist es vorteilhaft, daß die Empfangseinrichtungen lediglich passive Komponenten beinhalten. Die Empfangseinrichtungen sind dadurch billiger, störunempfindlicher und haben eine einfachere Schaltungstechnik.

Im folgenden wird die Erfindung anhand von zwei Ausführungsbeispielen unter Zuhilfenahme der Figuren 1 bis 3 erläutert. Es zeigen:
- Fig. 1: eine schematische Darstellung eines erfindungsgemäßen Übertragungssystems,
- Fig. 2: einen schematisch dargestellten Aufbau einer Sendeeinrichtung und einer Empfangseinrichtung des erfindungsgemäßen Übertragungssystems aus Fig. 1 und
- Fig. 3: eine schematische Darstellung eines zweiten Ausführungsbeispiels eines erfindungsgemäßen Übertragungssystems.

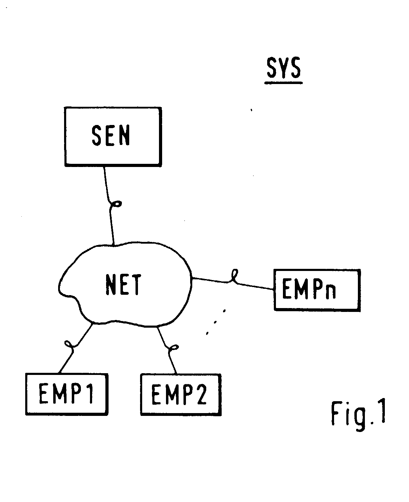

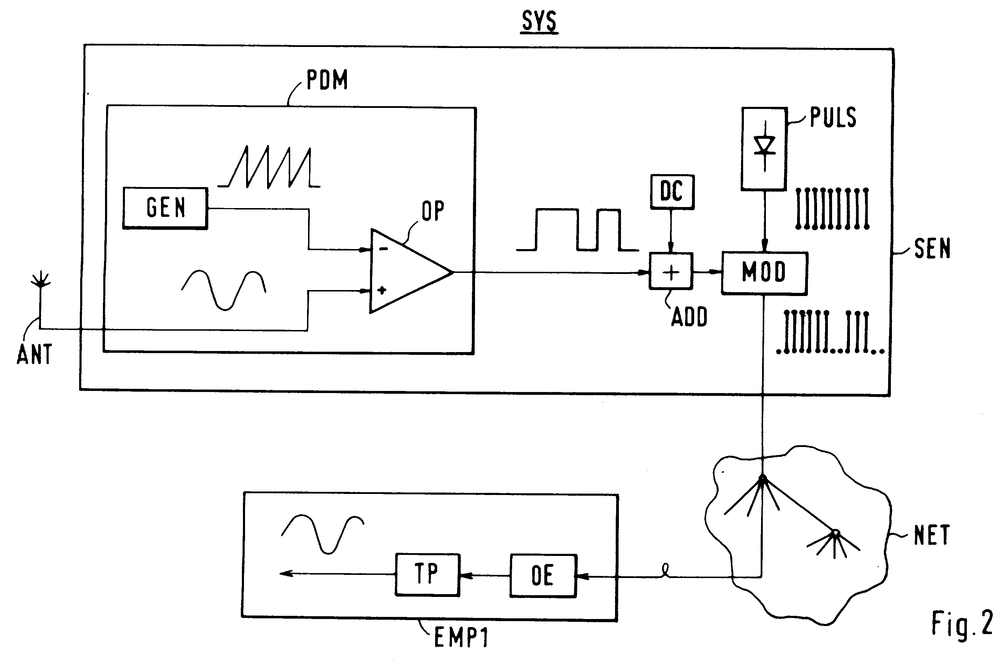

Das erste Ausführungsbeispiel wird nun unter Zuhilfenahme der Fig. 1 und 2 beschrieben. Fig. 1 zeigt ein erfindungsgemäßes optisches Übertragungssystem SYS zur optischen Übertragung analoger elektrischer Signale. Das optische Übertragungssystem SYS beinhaltet eine Sendeeinrichtung SEN, die über ein passives optisches Übertragungssystem NET mit mehreren Empfangseinrichtungen EMP1, EMP2, ..., EMPn verbunden ist; n ist eine natürliche Zahl.

Die analogen elektrischen Signale sind beispielsweise Fernsehsignale. Zur optischen Übertragung werden die analogen elektrischen Signale in der Sendeeinrichtung zunächst analog/digital umgesetzt. Dies erfolgt durch Modulation der analogen elektrischen Signale nach dem Pulsdauermodulationsverfahren. Anschließend werden die digitalisierten elektrischen Signale elektrisch/optisch umgesetzt. Die Umsetzung erfolgt mittels einer optischen Pulsquelle und eines elektro/optischen Modulators. Die Sendeeinrichtung dient somit zur analog/digital und elektrisch/optisch Umsetzung der analogen elektrischen Signale. Von der Sendeeinrichtung werden die analogen elektrischen Signale in Form von modulierten optischen Impulsen ins passive optische Übertragungsnetz NET eingespeist.

Das passive optische Übertragungsnetz NET ist beispielsweise ein optisches Kabelfernsehverteilnetz aus Glasfaserkabeln und optischen Splittern. Mittels des Kabelfernsehverteilnetzes wird eine Punkt-zu Mehrpunkt-Verbindung zwischen Sendeeinrichtung SEN und Empfangseinrichtungen EMP1, EMP2, ..., EMPn realisiert. Die von der Sendeeinrichtung SEN ausgesendeten modulierten optischen Impulse gelangen somit zu allen Empfangseinrichtungen EMP1, EMP2, ..., EMPn. Die analogen elektrischen Signale können sowohl Fernsehsignale als auch Videosignale zur Übertragung in einem Video-on-demand-System sein. Im letzteren Fall ist das passive optische Ubertragungsnetz NET vorzugsweise ein Verteilnetz mit Rückkanal.

In den Empfangseinrichtungen EMP1, EMP2, ..., EMPn werden die analogen elektrischen Signale jeweils aus dem empfangenen modulierten optischen Impulse zurückgewonnen. Die Rückgewinnung erfolgt mittels eines Optisch/Elektrisch-Umsetzers und eines passiven elektrischen Tiefpasses.

Das optische Übertragungssystem SYS stellt ein Verfahren zur optischen Übertragung analoger elektrischer Signale zur Verfügung, das unabhängig ist von der Struktur des optischen Übertragungsnetzes NET und bei dem die Rückgewinnung der analogen elektrischen Signale lediglich einen passiven elektrischen Tiefpaß erfordert. In einem Übertragungssystem SYS mit einer Sendeeinrichtung SEN und einer Vielzahl von Empfangseinrichtungen EMP1, EMP2, ..., EMPn, beispielsweise 1000, ist dies sowohl schaltungstechnisch als auch aus Kostengründen vorteilhaft.

Die analogen elektrischen Signale haben beispielsweise eine Bandbreite von 10 MHz. In der Sendeeinrichtung werden sie in modulierte optische Impulse mit einer Impulsfolgefrequenz von beispielsweise 10 GBits umgesetzt. Durch diese Überabtastung ist die Übertragung störunempfindlich.

Fig. 2 zeigt den Aufbau einer erfindungsgemäßen Sendeeinrichtung SEN und einer erfindungsgemäßen Empfangseinrichtung EMP1 für das optische Übertragungssystem aus Fig. 1 Die Sendeeinrichtung SEN und die Empfangseinrichtung EMP1 sind über ein optisches Verteilnetz NET aus optischen Splittern und Glasfaserleitungen miteinander verbunden.

Die Sendeeinrichtung SEN empfängt über eine Antenne ANT analoge elektrische Signale. Die empfangenen Signale sind beispielsweise von einer Fernsehstation ausgesendete Fernsehsignale. Sie werden einer Einrichtung PDM zugeführt, die zur Digitalisierung nach dem Pulsmodulationsverfahren dient. Die empfangenen Signale haben beispielsweise eine 3dB-Grenzfrequenz von 10 MHz und damit eine Bandbreite von 10 MHz. Die Einrichtung PDM beinhaltet einen Signalgenerator GEN und eine Vergleichseinheit VER.

Der Signalgenerator GEN generiert Abtastsignale, die beispielsweise sägezahnförmig sind oder eine dreieckige Form haben. Die Frequenz der Abtastsignale ist mindestens doppelt so hoch wie die 3dB Grenzfrequenzen der empfangenen analogen Signale, also beispielsweise 20 MHz. Die Amplitude der Abtastsignale ist mindestens gleich der Amplitude der empfangenen Signale.

Die Vergleichseinheit VER ist beispielsweise als Verstärker VER mit differentiellem Eingang ausgeführt, der als Komparator arbeitet. Die empfangenen analogen Signale werden dem positiven Eingang des Verstärkers VER und die generierten Abtastsignale dem negativen Eingang des Verstärkers VER zugeführt. Beim Vergleich der analogen elektrischen Signale mit den Abtastsignalen ruft jede Übereinstimmung der Eingangsspannungen am Ausgang des Verstärkers VER einen Vorzeichenwechsel der Ausgangsspannung hervor, wodurch pulsdauermodulierte Signale erzeugt werden. Die derart digitalisierten Signale werden dem elektrischen Eingang eines elektro/optischen Modulators MOD zugeführt zwischen die Einrichtung PDM und dem elektro/optischen Modulator MOD ist ein Addierer ADD zur Addition von Gleichspannungssignalen zu den digitalisierten Signalen geschaltet.

Die Gleichspannungssignale werden in einer Gleichspannungsquelle DC generiert. Sie dienen dazu, den Gleichspannungspegel der digitalisierten Signale an den Aussteuerungsbereich des elektro/optischen Modulators MOD anzupassen.

Die Sendeeinrichtung SEN beinhaltet des weiteren eine optische Pulsquelle PULS zum Generieren von optischen Impulsen, deren Impulsfolgefrequenz mindestens um den Faktor 100 über der 3 dB-Grenzfrequenz der analogen elektrischen Signale liegt, beispielsweise bei 10 GHz. Zur Erzeugung der 10 GHz-Signale wird vorzugsweise ein modengekoppelter Faserringlaser verwendet, dessen verstärkendes Element mit einem Element aus der Gruppe der Seltenen Erden, vorzugsweise Erbium, dotiert ist. Die generierten optischen Impulse werden dem optischen Eingang des elektro/optischen Modulators MOD zugeführt.

Der elektro/optische Modulator MOD ist beispielsweise ein Mach-Zehnder-Modulator, mittels dessen eine Intensitätsmodulation durchführbar ist. Er dient der Modulation der optischen Impulse mit den digitalisierten elektrischen Signalen. Die 10 GHz optischen Impulse werden also mit den digitalisierten 20 MHz Signalen moduliert. Aufgrund des hohen Frequenzunterschieds von mindestens zwei Größenordnungen zwischen optischen Impulsen und digitalisierten Signalen, wird eine hohe Auflösung in der Modulation der digitalisierten Signale erzielt, was zur Folge hat, daß die Verzerrung der in der Empfangseinrichtung EMP1 zurückgewonnenen analogen elektrischen Signale sehr gering ist. Die modulierten optischen Signale werden über das optische Verteilnetz NET zu mehreren Empfangseinrichtungen EMP1 übertragen, wovon eine in Fig. 2 dargestellt ist.

Die Empfangseinrichtung EMP1 beinhaltet zur Rückgewinnung der analogen elektrischen Signale aus den empfangenen modulierten optischen Signalen einen Optisch/Elektrisch-Umsetzer OE und einen nachgeschalteten passiven elektrischen Tiefpaß TP.

Im Optisch/Elektrisch-Umsetzer wird eine Umsetzung der empfangenen optischen Signale in elektrische Signale mittels einer Photodiode durchgeführt. Die Empfindlichkeit der Photodiode beträgt mindestens das Doppelte der 3dB-Grenzfrequenz der analogen elektrischen Signale, beispielsweise 20 MHz, womit die Einhüllende der empfangenen optischen Signale detektierbar und in elektrische Signale umsetzbar ist.

Der passive elektrische Tiefpaß TP ist beispielsweise ein Tiefpaß 5. oder 7. Ordnung, aufgebaut aus einer Kettenschaltung aus Widerständen und Kondensatoren und mit einer Grenzfrequenz, die der 3 dB-Grenzfrequenz der analogen elektrischen Signale entspricht, also beispielsweise 10 MHz. Mittels des passiven elektrischen Tiefpasses TP werden die analogen elektrischen Signale aus den Ausgangssignalen des Optisch/Elektrisch-Umsetzers OE zurückgewonnen. Zur Rückgewinnung der analogen elektrischen Signale sind somit keine aktiven Bauelemente erforderlich.

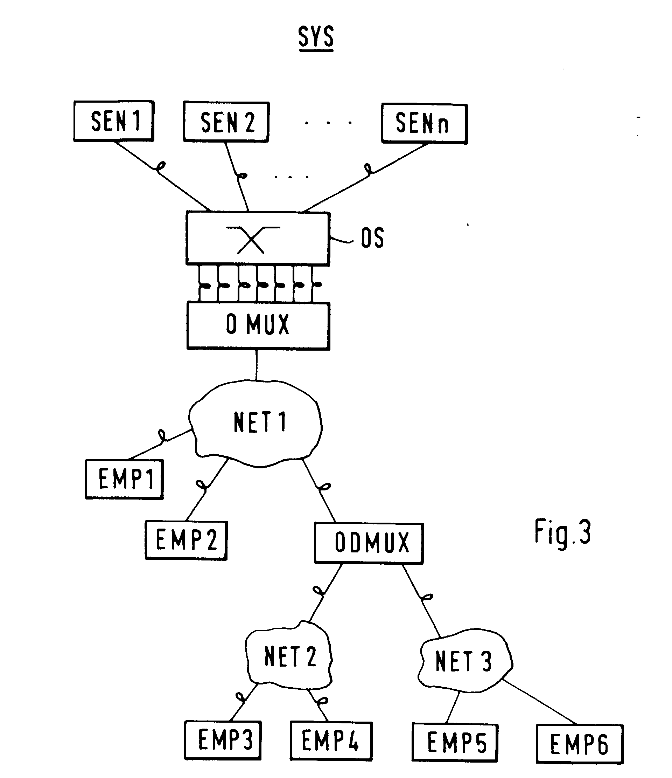

Das zweite Ausführungsbeispiel wird nun unter Zuhilfenahme der Fig. 3 beschrieben. Fig. 3 zeigt ein erfindungsgemäßes optisches Übertragungssystem SYS mit mehreren Sendeeinrichtungen SEN1, SEN2, ..., SENn und mehreren Empfangseinrichtungen EMP1 bis EMP6, von denen sechs beispielhaft dargestellt sind. Das optische Übertragungssystem SYS dient dazu, modulierte optische Impulse einzelner Sendeeinrichtungen SEN1 bis SENn zu einzelnen Empfangseinrichtungen EMP1 bis EMP 6 oder Gruppen von Empfangseinrichtungen EMP1, EMP2, EMP3, EMP4, EMP5, EMP6 zu übertragen. Die Übertragung erfolgt im optischen Zeitmultiplexverfahren. Da nicht alle Sendeeinrichtungen SEN1 bis SENn gleichzeitig aktiv sind, ist eine optische Schalteinheit OS vorgesehen, die vermittlungstechnische Funktionen ausführt, um die Übertragungskapazität der Glasfaserleitungen optimal auszunutzen.

Die Sendeeinrichtungen SEN1 bis SENn entspechen in ihrem Aufbau und ihrer Funktionalität jeweils der Sendeeinrichtung SEN aus Fig. 2.

Die Anzahl n der Sendeeinrichtungen SEN1 bis SENn ist beispielsweise 100. Jede Sendeeinrichtung SEN1 bis SENn ist über eine optische Glasfaserleitung mit der optischen Schalteinheit OS verbunden.

Die optische Schalteinheit OS hat die Aufgabe, die aktiven Sendeeinrichtungen SEN1 bis SENn zu detektieren und deren Signale zu einem optischen Multiplexer OMUX weiterzuleiten. Mit der Annahme, daß von den 100 Sendeeinrichtungen SEN1 bis SENn lediglich 6 gleichzeitig aktiv sind, reichen 6 Glasfaserleitungen von der Schalteinheit OS zum optischen Multiplexer OMUX aus, um alle modulierten optischen Impulse zu übertragen. Die optische Schalteinheit OS beinhaltet für jede Sendeeinrichtung SEN1 bis SENn beispielsweise einen asymmetrischen Koppler, einen elektro/optischen Modulator, eine Taktrückgewinnungseinheit und eine Photodiode. Die optische Schalteinheit OS beinhaltet des weiteren eine zentrale elektrische Steuerung und 6 elektro/optische Modulatoren für die 6 Glasfaserleitungen, die mit dem optischen Multiplexer OMUX verbunden sind. Ein Teil der modulierten optischen Impulse einer aktiven Sendeeinrichtung SEN1 bis SENn wird über den asymmetrischen Koppler ausgekoppelt und über die optische Taktrückgewinnungseinheit und die Photodiode der zentralen elektrischen Steuerung zugeführt. Die zentrale Steuerung steuert daraufhin zwei elektro/optische Modulatoren derart, daß die modulierten optischen Signale über eine noch nicht belegte Glasfaserleitung zum optischen Multiplexer OMUX weitergeleitet werden. Die optische Schalteinheit OS ist beispielsweise ein sog. optischer Crossconnect, bei dem jeder Eingang auf jeden Ausgang schaltbar ist; ggf. ist noch eine Glasfaserleitung für Steuersignale erforderlich.

Der optische Multiplexer OMUX bündelt die modulierten optischen Signale der 6 Glasfaserleitungen, so daß sie über eine Glasfaserleitung übertragbar sind. Die modulierten optischen Signale haben jeweils eine Bitrate von 10 Gbit/s. Die 6 modulierten optischen Signale werden im Zeitmultiplexverfahren zu einem 60 Gbits/Signal zusammengefaßt und über eine optische Glasfaserleitung in ein optisches Übertragungsnetz NET1 eingespeist.

Das optische Übertragungsnetz NET1 ist beispielsweise ein Kabelfernsehverteilnetz aus Glasfaserleitungen und optischen Splittern oder ein Unterseekabel. Die Struktur des optischen Übertragungsnetzes NET1 ist beispielsweise baumförmig, busförmig oder sternförmig. Das optische Übertragungsnetz NET1 ist beispielsweise mit mehreren Empfangseinrichtungen EMP1, EMP2, von denen zwei dargestellt sind, und mit einem optischen Demultiplexer ODMUX verbunden.

Jede Empfangseinrichtung beinhaltet einen optischen Demultiplexer ODMUX und sechs Optisch/Elektrisch-Umsetzer und sechs passive elektrische Tiefpässe zur Rückgewinnung der analogen elektrischen Signale.

Mittels des optischen Demultiplexers ODMUX können die zusammengefaßten modulierten optischen Signale auf unterschiedliche optische Übertragungsnetze NET2, NET3 aufgeteilt werden.

Das optische Übertragungsnetz NET2 ist beispielsweise ein Kabelfernsehverteilnetz, das die Fernsehsignale einer Fernsehstation, beispielsweise Sendeeinrichtung SEN1 zu mehreren Empfangseinrichtungen EMP3, EMP4, von denen zwei beispielhaft dargestellt sind, weiterleitet. Die Empfangseinrichtung EMP3 kann beispielsweise auch eine Schnittstelle zu einem Koaxialkabelnetz sein.

Das optische Übertragungsnetz NET3 ist beispielsweise ein Unterseekabel, mittels dessen Videosignale, z.B. die neuesten Kinofilme zu einzelnen Kinoanstalten, beispielhaft die Empfangseinrichtungen EMP5 und EMP6 weitergeleitet werden.

Beim ersten Ausführungsbeispiel wurden die über die Antenne ANT empfangenen analogen elektrischen Signale direkt der Einrichtung PDM zur Digitalisierung der analogen elektrischen Signale zugeführt. Da die Amplitude der Abtastsignale an die Amplitude der analogen Signale angepaßt sein muß, kann dies zu Fehlern bei der Modulation führen. Die kann auf folgende Art und Weise verhindert werden:

Der Sendeeinrichtung SEN wird ein Amplitudendetektor hinzugefügt zur Detektion der Amplitude der empfangenen analogen elektrischen Signale und zur Generierung von Steuersignalen zur Einstellung der Amplitude der Ausgangssignale des Signalgenerators GEN, der Vergleichseinheit VER und/oder der Gleichspannungsquelle DC. Mittels des Amplitudendetektors wird somit die Amplitude der empfangenen analogen Signale gemessen und die Amplitude der Abtastsignale an diese Amplitude angepaßt. Dies macht ggf. auch eine Neueinstellung der Amplitude der Ausgangssignale des Verstärkers und der Gleichspannungsquelle erforderlich.

In den beiden Ausführungsbeispielen kann eine vorgegebene und nicht variable Impulsfrequenz der optischen Impulse der optischen Pulsquelle, z.B. 10 GBits zur Digitalisierung einer Vielzahl von analogen elektrischen Signalen mit unterschiedlicher Bandbreite, z.B. 1 MHz bis 100 MHz, verwendet werden. Dies kann beispielsweise mittels eines Signalgenerators GEN, dessen Abtastsignalfrequenz einstellbar ist und einem Frequenzdetektor zur Detektion der 3dB-Grenzfrequenz der empfangenen analogen Signale und zur Generierung der Einstellungssignale für den Signalgenerator in der Sendeeinrichtung SEN aus Fig. 2 realisiert werden. Die gemessene 3dB-Grenzfrequenz liefert den Wert zur Einstellung der Abtastfrequenz, die mindestens um den Faktor 2 über der 3dB-Grenzfrequenz liegen muß.

## Patentansprüche

1. Sendeeinrichtung (SEN) zur optischen Übertragung analoger elektrischer Signale in Form von modulierten optischen Impulsen, mit
- einer Einrichtung (PDM) zur Digitalisierung der analogen elektrischen Signale nach dem Pulsdauermodulationsverfahren,
- einer optischen Pulsquelle (Puls) zum Generieren von optischen Impulsen, deren Impulsfolgefrequenz mindestens um den Faktor 100 über der 3dB-Grenzfrequenz der analogen elektrischen Signale liegt, und
- einen elektro/optischen Modulator (MOD) zur Modulation der optischen Impulse mit den digitalisierten elektrischen Signalen.

2. Sendeeinrichtung (SEN) nach Anspruch 1, dadurch gekennzeichnet, daß die analogen elektrischen Signale Fernsehsignale sind und die Sendeeinrichtung (SEN) zur Einspeisung der modulierten optischen Impulse in ein Kabelfernsehverteilnetz (NET) dient.

3. Sendeeinrichtung (SEN) nach Anspruch 1, dadurch gekennzeichnet, daß die optische Pulsquelle (PULS) einen modengekoppelten Faserringlaser und die Einrichtung (PDM) zur Modulation der analogen elektrischen Signale einen Signalgenerator (GEN) zur Generierung von Abtastsignalen und eine Vergleichseinheit (VER) zum Vergleichen der analogen elektrischen Signale mit den Abtastsignalen beinhaltet.

4. Sendeeinrichtung (SEN) nach Anspruch 1, dadurch gekennzeichnet, daß die Sendeeinrichtung (SEN) eine Gleichspannungsquelle (DC) zur Generierung von Gleichspannungssignalen und zur Anpassung des Gleichspannungspegels der digitalisierten Signale an den Aussteuerbereich des elektro/optischen Modulators (MOD) beinhaltet.

5. Sendeeinrichtung (SEN) nach den Ansprüchen 3 und 4, dadurch gekennzeichnet, daß die Sendeeinrichtung (SEN) einen Amplitudendetektor zur Detektion der Amplitude der analogen elektrischen Signale und zur Generierung von Steuersignalen zur Einstellung der Amplitude der Ausgangssignale des Signalgenerators (GEN), der Vergleichseinheit (VER) und/oder der Gleichspannungsquelle (DC) beinhaltet.

6. Sendeeinrichtung (SEN) nach Anspruch 1, dadurch gekennzeichnet, daß die Frequenz der Abtastsignale des Signalgenerators einstellbar ist und daß die Sendeeinrichtung (SEN) einen Frequenzdetektor zur Detektion der 3dB-Grenzfrequenz der analogen elektrischen Signale und zur Generierung der Einstellsignale für die Abtastsignalfrequenz beinhaltet.

7. Sendeeinheit mit wenigstens zwei Sendeeinrichtungen (SEN) nach Anspruch 1 und einem optischen Multiplexer (OMUX) zum optischen Zeitmultiplexen der modulierten optischen Impulse.

8. Sendeeinheit nach Anspruch 7, dadurch gekennzeichnet, daß die Sendeeinheit eine optische Schalteinheit (OS) beinhaltet, die zwischen die wenigstens zwei Sendeeinrichtungen (SEN) und den optischen Multiplexer (OMUX) geschaltet ist und mittels derer vermittlungstechnische Funktionen durchführbar sind.

9. Optisches Übertragungssystem (SYS) mit wenigstens einer Sendeeinrichtung (SEN) nach Anspruch 1, einem passiven optischen Übertragungsnetz (NET) und mehreren Empfangseinrichtungen (EMP), bei dem jede Empfangseinrichtung (EMP) einen Optisch/Elektrisch-Umsetzer (OE) und einen passiven elektrischen Tiefpaß (TP) zur Rückgewinnung der analogen elektrischen Signale aus den empfangenen modulierten optischen Impulsen beinhaltet.
